# EUROPEAN PATENT APPLICATION

(11) **EP 2 508 593 A1**
(43) Date of publication of application: **10.10.2012**
(21) Application number: 11161741.1
(22) Date of filing: 08.04.2011
(51) Int. Cl.: C12G 3/07

(54) **Oak stave module for flavouring of wines, beers and liquors, manufacturing device and process and systems for insertion in vats**

(71) Applicant: Bishop, Vivian Alain, 66300 Fourques (FR)
(72) Inventor: Bishop, Vivian Alain, 66300 Fourques (FR)
(74) Representative: Pontet, Bernard

(57) **Abstract**

The present invention concerns a wooden module for flavouring a liquid by immersion of said module in said liquid, comprising a plurality of wooden elements of a substantially elongated shape, and further comprising assembly means able to (i) assemble the wooden elements so as to constitute a standalone module, and (ii) retain the wooden elements so as to maintain a gap between successive wooden elements along said assembly means.

The present invention concerns also a manufacturing tool and a method for manufacturing the wooden modules of the invention, and systems for insertion of the wooden modules in vats.

## Description

### Field of the invention

The invention relates to a system for managing oak staves immersed in wine and liquor vats during the vinification and/or ageing process. It relates also to a module of staves to be placed in the vat and a process for manufacturing the module.

The field of the invention is, but not limited to, the wine and liquor production industry.

### Background of the invention

Traditionally, many wines or liquors are maturated in wooden barrels, made for instance of French or American oak for the maturation of the wine. A wood character is so imparted to the wine or the liquor, due to the contact of the liquid with the wooden walls of the barrel.

The rate and degree with which this character is imparted to the maturing product depends, among other things, upon the ratio of the internal surface of the barrel to the volume of liquid that it contains. Thus, to be effective, the process requires the use of relatively small barrels.

In another hand, barrels are expensive, as they must be made with specific quality of wood and involve a complex manufacturing process with a lot of know-how. Their lifetime for use in wine or liquor maturation process is also quite limited, as the active constituents of the wood are ultimately all transferred to the product.

So the use of barrels has a strong impact on the final cost of the product, which is not compatible with the requirement of lowering the production costs to address competitive markets.

For a better rationalization of costs and methods, the maturation of wine and liquor is frequently done in tanks or vats much larger than barrels, and made of materials impervious to liquids, such as stainless steel and epoxy coated concrete.

These vats allow production of larger volumes, and also a better control of the process. They can be for instance quickly emptied, cleaned and reused.

However, imparting a wooden character similar to what would have been obtained with oak barrels is often desirable for the wine and liquor production, even in tanks.

According to a well-known technique, it may be obtained by adding in the maturation tanks pieces of oak such as planks, or staves. Theses staves have received similar heat treatment to the staves used for manufacturing barrels. The simplest way to proceed is just to put the staves in the tank and let them float at the surface of the wine or the liquor. This method has however several drawbacks:
- the total surface of wood in contact with the wine or the liquor, which is an important parameter for the control of the maturation process, is not well determined as the staves may pile up;
- an important part of the potentially available surface of wood may be lost, as the upper surface of the staves, which are floating, is not in contact with the product. So the staves are not optimally used;
- the handling of the staves, for putting them in place and to taking them out of the tank, is not easy and time consuming.

We know also methods consisting in fixing the staves on structures immersed in the tank, in order to have the staves maintained immersed with the liquid in contact with all their surfaces.

We know for instance the document FR 2 736 923 A1 by Bourgeois, which discloses a system in which the staves are arranged and fixed on a metal structure into the tank with hooks at one of their extremities, and fitted with a weight on their other extremity to stay immersed. The staves must be added one by one in the tank when it is empty, which is a painful and time consuming task.

We know also the document FR 2 895 992 B1 by Conte et al., which discloses a structure on which the staves are fixed. The structure comprises maintaining means to immobilize it into the tank. The staves comprise a drilling at their extremities and are pre-assembled on at least two axes, separated by spacers. The axes are terminated by clips to secure the assembly. The operation of putting the staves on the tank is simplified compared to FR 2 736 923, but the pre-assemblies of staves still have to be done manually and remain a very time consuming task. Furthermore, the structure with the staves fixed on it cannot be, or at least not easily, inserted and removed from a tank full of liquid.

It is an object of the invention to provide an arrangement of wood elements such as oak staves, for the maturation of wine or liquors, which is easy to handle by the staff of a winery or a distillery with a minimum of loss of time, and provides an optimal surface of contact with the liquid.

It is another object of the invention to provide an arrangement of wood elements such as oak staves, for the maturation of wine or liquors, which can be manufactured using industrial methods, to allow minimizing the production costs.

It is another object of the invention to provide a method for manufacturing such arrangement of wood elements.

It is still another object of the invention to provide systems for disposing such arrangement of wood elements in tanks, and allowing insertion and removal when the tank is not empty.

### Summary of the invention

Such objects are accomplished with a wooden module for flavouring a liquid by immersion of said module in said liquid, comprising a plurality of wooden elements of a substantially elongated shape, and further comprising assembly means able to:
- assemble the wooden elements so as so constitute a standalone module,
   and
- retain the wooden elements so as to maintain a gap between successive wooden elements along said assembly means.

The wooden elements may comprise oak staves for flavouring wine, beer and/or liquors.

The wooden elements may also comprise staves or planks made from other wood species such as chestnut tree or acacia.

According to some modes of realization:
- the wooden elements may be arranged in rows, and the assembly means may comprise at least one of the following: nail, screw, metal wire;
- the assembly means may comprise plastic elements;
- the assembly means may comprise screws and/or nails passing through the wooden elements;
- the assembly means may comprise metal wires forced into grooves machine cut in the wooden elements;
- the wooden module of the invention may further comprise drillings through the wooden elements, said drillings being substantially aligned throughout the module.

According to another aspect, the invention comprises a manufacturing tool for manufacturing the wooden modules of the invention, comprising a plurality of spacers arranged in at least one stack so as to constitute a series of substantially parallel guiding surfaces separated by seatings, said seatings being designed so as to be able to receive the wooden elements, said spacers having thicknesses substantially matching the desired gaps between the wooden elements in a module.

The manufacturing tool of the invention may further comprise:
- translation means on which the spacers are movably mounted, enabling movement in a direction substantially perpendicular to the guiding surfaces,
- springs placed between the spacers in order to favour the increase of the width of the seatings between said spacers (for easy introduction of the wooden elements), and
- compression means allowing pressing together the spacers and the wooden elements once inserted into the seatings.

According to another aspect, the invention comprises a method for manufacturing the wooden modules using the manufacturing tool of the invention, comprising steps of:
- placing a plurality of wooden elements into the seatings, so as to obtain a succession of stacked wooden elements separated and maintained in place by the spacers,
- assembling the wooden element using assembly means, and
- removing the module of wooden elements from the spacers.

According to still another aspect, the invention comprises a system for flavouring a liquid in a vat comprising at least one wooden module of the invention, and further comprising linking elements with fastening means for fastening said wooden modules to said linking elements, said linking elements and said wooden modules being shaped so as to allow (i) maintaining gaps between the fastened wooden modules, (ii) being at least partially immersed in the liquid filling the vat, and (iii) being inserted and removed from the vat without emptying the liquid.

According to some modes of realization:
- the linking elements may comprise plastic elements;
- the linking elements may comprise a metal frame (or cage or basket, made of stainless steel) with bars, and the wooden modules may comprise drillings, so as to allow fastening the wooden modules on the frame by inserting the bars in the drillings;
- the bars may further comprise clips (or screws or bolts) for securing the wooden modules once inserted;
- the linking elements may comprise elements whose weight is adjusted so that the wooden modules are completely immersed in the liquid;
- the system may further comprise weights fastened on the linking elements, allowing maintaining below the surface of the liquid at least most of the parts of the wooden modules, or preferably all of the parts of the wooden modules.

According to some other modes of realization:
- the linking elements may comprise a fastening element of an elongated shape with two extremities substantially in the shape a hook, said hooks being able to be hooked on the assembly means of the wooden modules so as to link together at least two of such modules;
- the system may further comprise a weight fastened on the fastening element, allowing maintaining below the surface of the liquid at least most of the parts of the wooden modules, or preferably all of the parts of the wooden modules;
- the system may further comprise an elongated element with a tip at one extremity and a hook at the other, said tip being able to be forced into the bung (or the cork) of the vat, and said hook being able to be hooked on the assembly means of the wooden modules.

According to some other modes of realization, the linking elements may comprise elongated elements of metal or wood, able to be fastened on a plurality of wooden modules so as to constitute a block (or a cartridge) of such wooden modules.

The various aspects of the invention are complementary as they cover the most important aspects of a process starting with the production of the wooden modules (or oak staves modules) and extending to their utilization in the winery or the distillery. These various aspects of the invention may be seen as elements of an optimization process covering the whole production and management chain of the wooden modules with the purpose of proposing a quality product with a global cost (including production cost and utilization costs) as low as possible.

So to summarize, the invention proposes a wooden module (or an oak staves module) which makes the handling of the staves much easier than with the arrangements of the prior art. This module may be delivered as a standalone element by the provider, so that the employees of a winery or a distillery do not need at any stage to handle individual staves. Their work is considerably simplified and they save a lot of time.

The conception of the module is as simple as possible, as it can be made using just staves and assembly means that retain the elements so as to maintain a gap between them. There is no more need for spacing elements or the like. In addition, this conception makes possible the use of a simple manufacturing process which can be automated in a large extent and contributes to maintain the cost of the final product at a low level.

The manufacturing process and the manufacturing tools are parts of the invention because they all contribute to the goals of simplification and cost reduction of the final product (the module). These goals can be reached precisely because the structure of the modules and the manufacturing process and tools were studied simultaneously to allow an efficient industrialization of the production of the modules.

The invention proposes also systems for placing and handling the modules in the vat which allow an efficient use of these modules for the best results and the lower overall cost. These systems for placing and handling the modules in the vat are so designed to exploit advantageous characteristics of the modules. For instance, the assembly means may be substantially rigid and particularly well adapted to the fixation of hooking elements. These assembly means may also confer a substantial rigidity to the modules which, when fitted with drillings, may easily be lowered through same drillings on retention bars.

### Description of the drawings

The methods according to embodiments of the present invention may be better understood with reference to the drawings, which are given for illustrative purposes only and are not meant to be limiting. Other aspects, goals and advantages of the invention shall be apparent from the descriptions given hereunder.
- figure 1 shows a first mode of realization of a wooden module of the invention. Figure 1(a) shows a side view and figure 1(b) shows a top view;
- figure 2 shows a second mode of realization of a wooden module of the invention. Figure 2(a) shows a top view and figure 2(b) shows a side view of a wooden element alone;
- figure 3 shows a manufacturing tool for manufacturing the wooden modules of the invention. Figure 3(a) shows a front view of the tool, figure 3(b) shows a side view of the tool in with staves inserted, and figure 3(c) shows a side view of the tool with staves inserted and the spacers compressed;
- figure 4a and 4b show respectively a front view and a side view of a first mode of realization of a system for insertion of the wooden modules in a vat;
- figure 5 shows a second mode of realization of a system for insertion of the wooden modules in a vat;
- figure 6 shows a third mode of realization of a system for insertion of the wooden modules in a cask. Figure 6(a) shows a global view, and figure 6(b) and figure 6(c) show detailed views of maintaining elements;
- figure 7 illustrates the insertion in a vat or a cask of the system of figure 6.

### Detailed description of the invention

With no intention to be limitative, the detailed description will be done in the context of an application of the invention in the wine production.

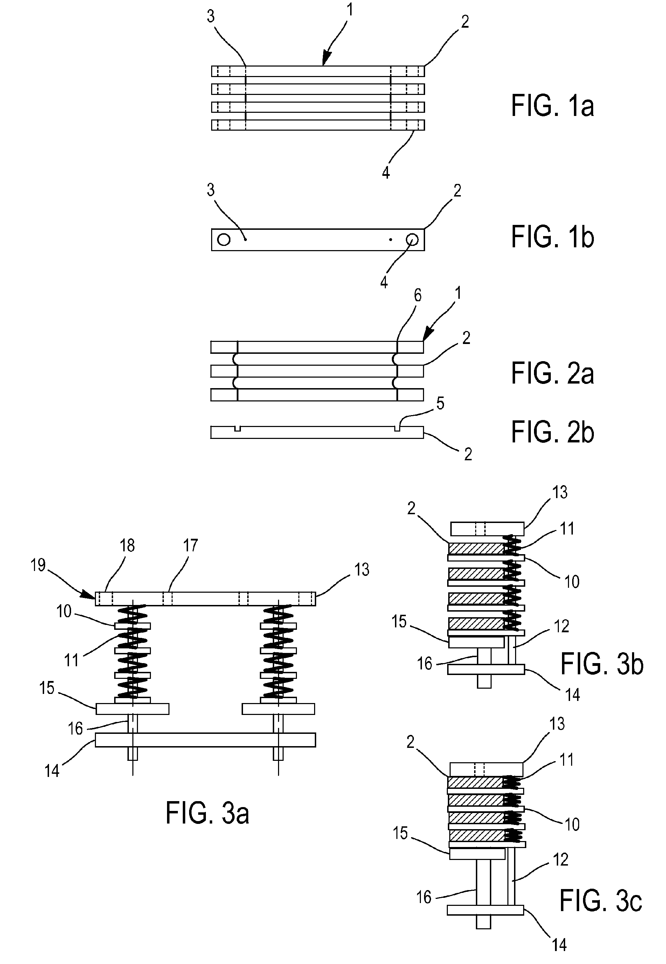

With reference to figure 1, a wooden module 1 of the invention may comprise a plurality of wooden elements 2 which are oak staves of a substantially rectangular section and a substantially rectilinear elongated shape (like planks).

These oak staves 2 are assembled in a substantially rigid fashion in the shape of a pile by assembly means 3. Theses assembly means 3 maintain the oak staves 2 together so as to constitute a module 1 and in the same time, as they tightly hold to the staves 2, they maintain the spacing or gaps between the staves 2 without the need for other spacing elements.

The assembly means 3 may comprise nails or screws nailed or screwed through the staves 2. Depending on the number of staves 2 of the module 1, all the staves 2 may be mailed or screwed in one shot, or, because of the limited length of the nails or the screws, they may be added to the assembly and nailed or screwed to the already assembled staves 2 in several steps.

In order to obtain a good rigidity, each stave 2 must be assembled to the others on at least two points.

Depending on the way the modules 1 are used, they may further comprise drillings 4 which are done through the whole module 1, and which, thanks to the rigidity of the module 1, provide a convenient mean for fastening these modules 1.

Depending on the application, the modules 1 may comprise a various number of staves 2 of various sizes. As a matter of example, a module 1 may comprise four oak staves 2 with a length of 330 mm, a width of 25 mm and a thickness of 7 mm, separated by a 3 mm gap. The assembly means 3 comprise stainless steel screws of 4 millimetres diameter.

In some other cases, a module 1 may comprise longer staves, with dimension such as 1000 mm length, 100 mm width and 12 mm thickness. In this case, module 1 may consist from 10 to 20 or more staves.

With reference to figure 3, the wooden module 1 of the invention can be very conveniently assembled using a manufacturing tool 19, following a process which allows a large degree of automation.

The manufacturing tool 19 comprises a plurality of spacers 10 which are mounted on translation means 12. The spacers 10 are separated by springs 11 which tend to enlarge the gaps between them. The gaps between the spacers 10 constitute a plurality of seatings.

In a first step of the manufacturing process, the oak staves 2 are inserted in these seatings. This insertion is highly facilitated by the action of the springs 11 which maintain the spacers 10 apart from each other. The insertion of the staves 2 is illustrated on figure 2(b).

In a second step, the stack assembly composed of the staves 2 and the spacers 10 is compressed against the upper plate 13, to maintain tightly the staves 2 in place in the position they are expected to have in the final wooden module 1. The desired gaps between the staves 2 are maintained by the spacers 10. The compression is done with a pressing element 15 moving along an axis 16 relative to a lower plate 14. The pressing element 15 pushes on the lower spacer 10 and all the spacers 10 and staves 2 move towards the upper plate 13, the spacers sliding on the translation means 12. This step is illustrated on figure 2(c).

In a third step, the module 1 is assembled by inserting (that is screwing or nailing) screws or nails 3 through the staves 2. The tool 19 comprises for that clearing or openings 17 in the upper plate 13 through which the assembly means 3 may be inserted, possibly through the spacers 10 which in that case comprise also openings allowing removal of the modules after assembly.

Then, drillings 4 may be done through the stack of staves. The tool 19 comprises clearing or openings 18 in the upper plate 13 for this operation.

Finally, the module 1 is removed from the tool 19 by releasing the pressure of the pressing tool 15 and pushing away the assembled staves 2 from the spacers 10, using a lever acting from the side of the translation means 12 (which is not shown in the figure).

As already explained, the purpose of the wooden modules 1 of the invention is to be immersed in wine maturation vats (or casks or barrels), to impart to that wine "boisé" characteristics.

There are several convenient ways of using these modules 1. The simplest one is to put the modules 1 in the vat through an opening and let them float in the wine, attached to a link to make their removal convenient. One module 1 has a much larger surface of exchange with the wine than a single stave 2, and is easy to handle, so there is already a benefit in using it.

Module 1 can be also be used on its own as a retrofit onto existing attachment means such a cable or metal rods running along the periphery of the vat.

However, it is usually more efficient to use assemblies of modules 1, or system for immersion in the vat.

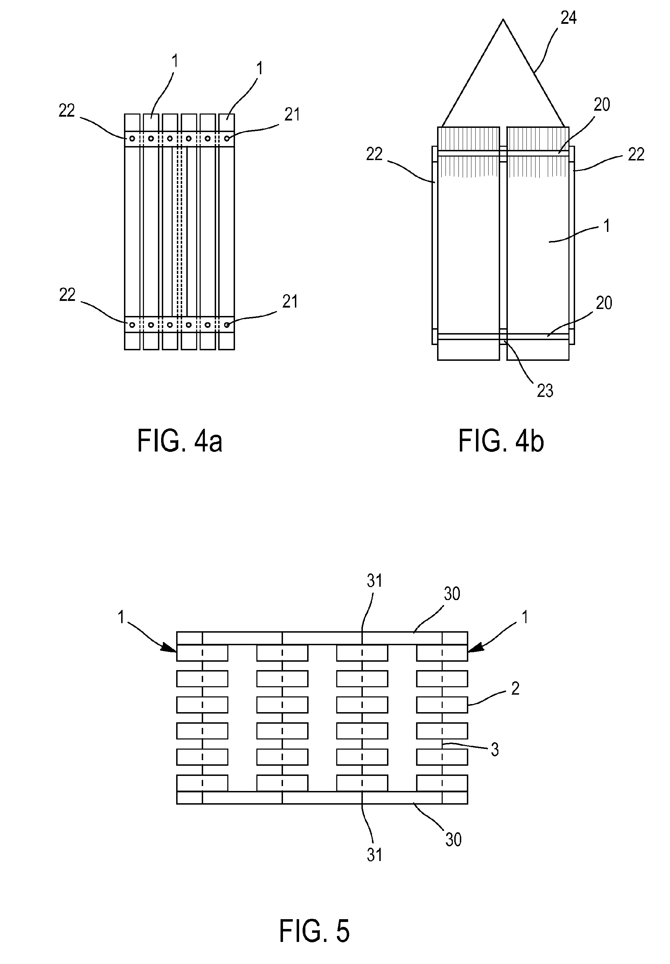

With reference to figure 4, according to a first mode of realization, an immersion system can comprise a frame 22 (or cage or basket, possibly comprising several parts) in stainless steel. The frame 22 comprises bars 20 for holding the wooden modules 1, by inserting the bars 20 in the drillings 4 of the wooden modules. Retention means 21 (such as clips, bolts, pins or locks) at the extremity of the bars prevent the modules 1 to move away. As shown in figure 4a (front view), Modules 1 can be added one next to the other with a space left between them, their number being only limited by the size of the vat opening and by the handling capabilities of the winery, brewery or distillery. As shown in figure 4b (side view), more than one module 1 can be stacked on the bars 20, with spacers 23 between them. Longer than needed screws or nails 3, protruding from the last stave of the modules 1, can be used as spacers 23. Such assembly of modules 1 constitutes a bundle. For sake of clarity, in figure 4b the bars 20 are shown in transparency through the wooden modules 1.

Alternatively, the bars 20 may be threaded and the retention means 21 may comprise nuts.

The frame 22 is designed to allow convenient handling, with for instance attaching means 24 for insertion and removal from the vat. The weight of the structure contributes to the immersion of the modules 1 in the wine.

Such frame system 22 has the advantage that all the elements are reusable when the modules 1 are changed.

With reference to figure 5, according to a second mode of realization, a system can comprise a block or a cartridge of several modules 1, maintained together with the desired gaps between them by linking elements 30. These linking elements 30 are fixed with nails or screws 31 or the like to the wooden modules 1. The whole assembly forms then one block with a surface of exchange much larger than that of a single module 1. It allows simplifying the handling operations.

The linking elements 30 may comprise bars of metal, in which case they are re-usable, or they may comprise wooden planks or oak staves, in which case the whole block is disposable.

The linking elements 30 may also comprise plastic elements.

The block may be let floating in the wine, or weights may be added to make it sink.

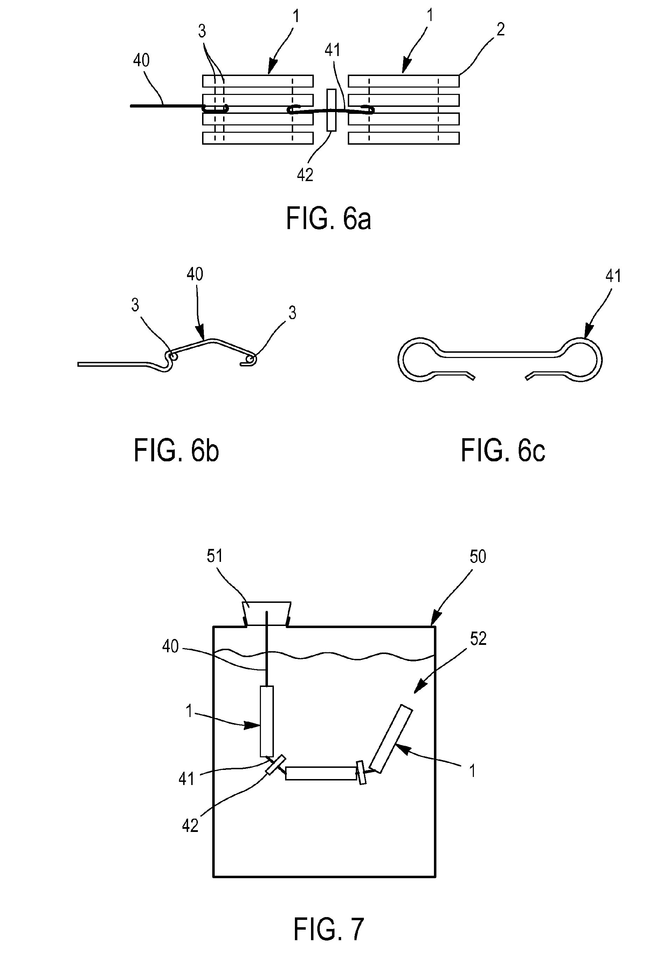

With reference to figures 6 and 7, according to a third mode of realization more related to small wooden vats, an immersion system can comprise wooden modules 1 attached together by fastening elements 41 so as to form for instance a string or a train of modules. These fastening elements 41 are conveniently made of a stainless steel wire with the two extremities folded in the shape of a hook as shown on figure 6(c). These hooks can be hooked on the assembly means 3 of the wooden modules 1 (the screw or the nails for instance) so as to link together at least two of such modules 1.

The chaining elements 41 may also be made of plastic.

A weight 42 of the shape of a disk in stainless steel with a hole on the centre can be added, with a fastening element 41 passing through the hole, to prevent the modules from floating.

Conveniently, the chain of modules 1 can be fixed to the bung (or cork) 51 of the cask with an element like a pin 40, pinned on that bung 51. This pin 40 is shown on figure 6(b). It is fixed on a pair of nearby assembly means 3 (comprising for instance two nails or two screws) of the wooden module 1 with pair of hooks that clip on these assembly means 3.

With this disposition, as shown in figure 7, once pinned vertically on the bung 51, the first module 1 is maintained vertically into the liquid 52, and the other chained modules 1 are maintained deep into the liquid 52, especially if the chain includes weights 42 between the modules 42.

This system uses rather small wooden modules 1. Advantageously, it can be easily removed from the vat 50 as it is attached to the bung 51.

Again, in this system only the modules are disposable. The other elements (the pin 40, the hooks 41 and the weights 42) may be easily cleaned and reused.

According to some modes of realization of the mounting tool 19:
- the whole mounting tool may be placed on a rotation axis, so that to be put in an horizontal position for placing the staves 2, and then in a vertical position for pressing, nailing or screwing, and drilling;
- the mounting tool may comprise spacers 10 in fixed position, without translation means 12 and without springs 11. Then the width of the seatings between these spacers 10 should be slightly larger than the thickness of the staves 10.

With reference to figure 2, according to another mode of realization of wooden module, a wooden module 1 of the invention may comprise oak staves 2 disposed side-by-side and assembled by metal wires 6 (of stainless steel) forced into grooves 5 machine cut in the staves 2. So the staves 2 may be provided in roll, from which the user may take modules 1 by cutting the metal wires 6. Even if flexible, the metal wires 6 are still able to maintain the gaps between the staves, as they tightly hold in the seatings 5.

The wooden modules 1 of the invention may be used with any means for handling them and inserting them in a vat.

For instance, one or several wooden module 1, possibly assembled together, may be inserted in a bag, which is in turn immersed in the vat. This bag may be a reusable nylon, polypropylene or polyester infusion bag, with fastening means on one side allowing an easier handling, and other fastening means on an opposite side enabling attachment of weight or ballast.

While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

## Claims

1. Wooden module for flavouring a liquid by immersion of said module (1) in said liquid (52), comprising a plurality of wooden elements (2) of a substantially elongated shape, **characterized in that** it further comprises assembly means (3, 6) able to:
- assemble the wooden elements (2) so as so constitute a standalone module (1), and
- retain the wooden elements (2) so as to maintain a gap between successive wooden elements (2) along said assembly means (3, 6).

2. Module of claim 1, **characterized in that** the wooden elements (2) comprise oak staves for flavouring wine, beer and/or liquors.

3. Module of claim 1 or 2, **characterized in that** the wooden elements (2) are arranged in rows, and the assembly means (3, 6) comprise at least one of the following: nail, screw, metal wire.

4. Module of claim 3, **characterized in that** the assembly means (3) comprise screws and/or nails passing through the wooden elements (2).

5. Module of claim 3 or 4, **characterized in that** the assembly means comprise metal wires (6) forced into grooves (5) machine cut in the wooden elements (2).

6. Module of any of the preceding claims, **characterized in that** it further comprises drillings (4) through the wooden elements (2), said drillings (4) being substantially aligned throughout the module (1).

7. Manufacturing tool (19) for manufacturing the modules (1) of any of claims 1 to 6, **characterized in that** it comprises a plurality of spacers (10) arranged in at least one stack so as to constitute a series of substantially parallel guiding surfaces separated by seatings, said seatings being designed so as to be able to receive the wooden elements (2), said spacers (10) having thicknesses substantially matching the desired gaps between the wooden elements (2) in a module (1).

8. Manufacturing tool of claim 7, **characterized in that** it further comprises:
- translation means (12) on which the spacers (10) are movably mounted, enabling movement in a direction substantially perpendicular to the guiding surfaces,
- springs (11) placed between the spacers (10) in order to favour the increase of the width of the seatings between said spacers (10), and
- compression means (15, 16) allowing pressing together the spacers (10) and the wooden elements (2) once inserted into the seatings.

9. Method for manufacturing the modules of any of claims 1 to 6, using the manufacturing tool of claim 7 or 8, **characterized in that** it comprises steps of:
- placing a plurality of wooden elements (2) into the seatings, so as to obtain a succession of stacked wooden elements (2) separated and maintained in place by the spacers (10),
- assembling the wooden element (2) using assembly means (3), and
- removing the module (1) of wooden elements from the spacers (10).

10. System for flavouring a liquid in a vat, comprising at least one wooden module (1) of any of claims 1 to 6, **characterised in that** it further comprises linking elements (22, 30, 41) with fastening means for fastening said wooden modules (1) to said linking elements (22, 30, 41), said linking elements (22, 30, 41) and said wooden modules (1) being shaped so as to allow (i) maintaining gaps between the fastened wooden modules (1), (ii) being at least partially immersed in the liquid (52) filling the vat (50), and (iii) being inserted and removed from the vat (50) without emptying the liquid (52).

11. System of claim 10, **characterized in that** the linking elements comprise a metal frame (22) with bars (20), and the wooden modules (1) comprise drillings (4), so as to allow fastening the wooden modules (1) on the frame (22) by inserting the bars (20) in the drillings (4).

12. System of claim 10 or 11, **characterized in that** the linking elements comprise elements whose weight is adjusted so that the wooden modules (1) are completely immersed in the liquid (52).

13. System of claim 10, **characterised in that** the linking elements comprise a fastening element (41) of an elongated shape with two extremities substantially in the shape a hook, said hooks being able to be hooked on the assembly means (3) of the wooden modules (1) so as to link together at least two of such modules (1).

14. System of claim 13, **characterized in that** it further comprises an elongated element (40) with a tip at one extremity and a hook at the other, said tip being able to be forced into the bung (51) of the vat (50), and said hook being able to be hooked on the assembly means (3) of the wooden modules (1).

15. System of claim 10, **characterised in that** the linking elements comprise elongated elements of metal or wood (30), able to be fastened on a plurality of wooden modules (1) so as to constitute a block of such wooden modules (1).
